# EUROPEAN PATENT SPECIFICATION

(11) **EP 2 790 200 B1**
(45) Date of publication and mention of the grant of the patent: **03.02.2016**
(21) Application number: 14162815.6
(22) Date of filing: 31.03.2014
(51) Int. Cl.: H01H 13/705

(54) **Input apparatus for electronic device**
Eingabevorrichtung für elektronische Vorrichtung
Appareil d'entrée pour dispositif électronique

(30) Priority: 11.04.2013 KR 20130040064
(43) Date of publication of application: 15.10.2014
(73) Proprietor: Samsung Electronics Co., Ltd., Suwon-si Gyeonggi-do 443-742 (KR)
(72) Inventor: Kang, Junghyun, Gyeonggi-do 443-742 (KR); Baek, Seungchul, Gyeonggi-do 443-742 (KR); Yoon, Byounguk, Gyeonggi-do 443-742 (KR); Lee, Jaeryang, Gyeonggi-do 443-742 (KR)
(74) Representative: Nederlandsch Octrooibureau

(56) References cited:
- GB-A- 2 054 270
- US-A1- 2010 300 858

## Description

### BACKGROUND

### 1. Technical Field

The present disclosure relates generally to an input device, and more particularly, to an input device for an electronic device which includes a floating prevention mechnism.

### 2. Description of the Related Art

Recent electronic devices provide various functions such as a voice conversation function, a music playing function, a photographing function, and an internet connection. The electronic device involves but not exclusively a mobile communciation terminal, a smart phone, a Personal Digital Assistant (PDA), a tablet Personnel Computer (PC), a hand-held PC, a Portable Multimedia Player (PMP), or the like. Such an electronic device may include various input devices for controlling various functions, for example, physical keys, touch keys, touch screens, or the like. The electronic device usually includes one or more button type physical keys. For example, the electronic device may include a power key, a home key, a volume key, etc. which are formed as physical keys.

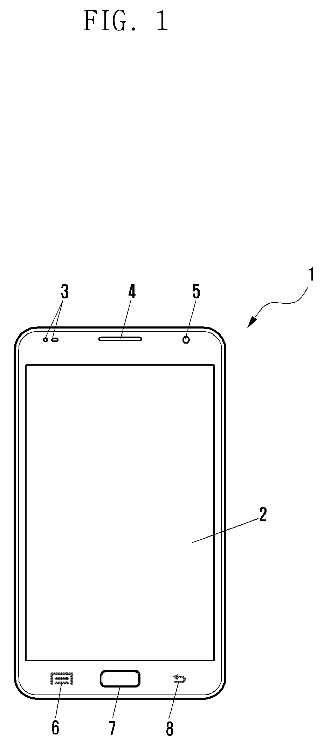

FIG. 1 is a front view of a conventional electronic device.

Referring to FIG. 1, the conventional electronic device 1 may have a rectangular shape. The electronic device 1 may include a display unit 2 on a front face thereof. In addition, the electronic device 1 may include an illuminance sensor 3, a speaker 4, and a camera 5 which are positioned at the upper end of the display unit 2 as well as a menu key 6, a home key 7, and a cancel key 8 which are positioned at the lower end of the display unit 2. The menu key 6 and the cancel key 8 of the electronic device 1 may be formed as touch keys and the home key 7 may be formed as a button type physical key. In addition, although not illustrated in FIG. 1, a power key and a volume key may also be formed as button type physical keys.

Each of the above-mentioned physical keys of the electronic device has a structure that presses a dome switch mounted on a substrate so as to generate an electric signal. For this purpose, each physical key may have a protrusion for pressing the dome switch, which is formed at the center of the lower end thereof. That is, each of the physical keys takes a form in which the central portion protrudes. For this reason, the physical keys have a problem of rocking from side to side. Hereinafter, the problem will be described in more detail with reference to drawings.

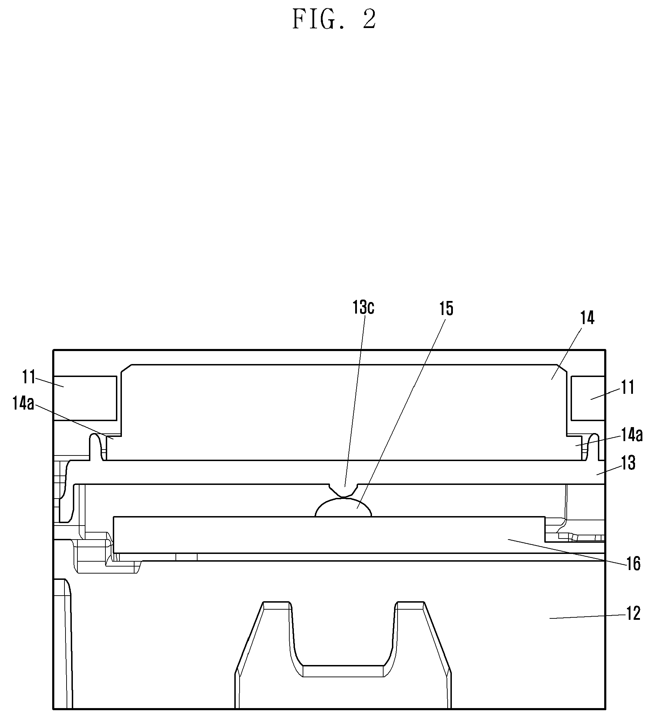

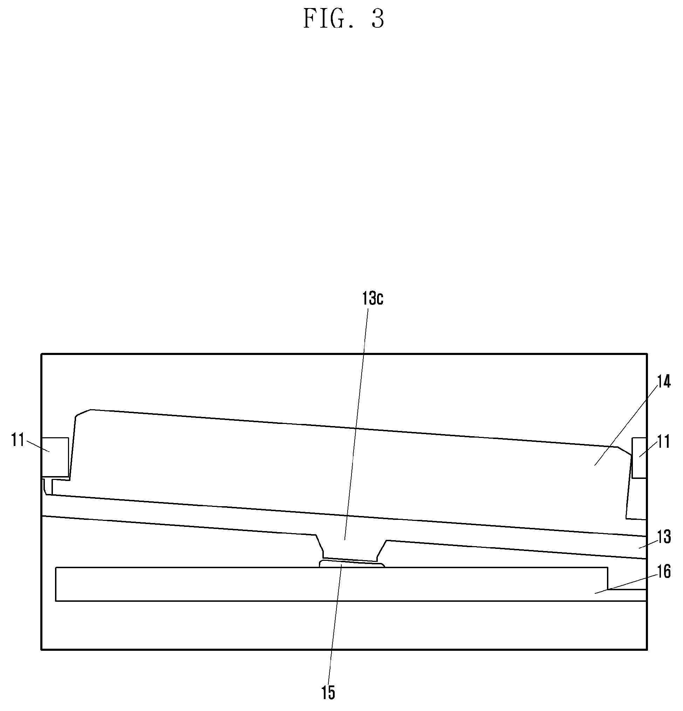

FIG. 2 is a view for describing a structure of a home key of a conventional electronic device, and FIG. 3 is a view illustrating the home key of the conventional electronic device inclined to the right side.

Referring to FIGs. 2 and 3, a home key 7 may be positioned between a front case 11 and a rear case 12. The home key 7 may include a body 14, a key base 13, and a switch 15.

When a force of which the magnitude is equal to or larger than a predetermined level is applied to the switch 15, the switch 15 may generate an electric signal. Specifically, the switch 15 is elastically deformed by a user's pushing operation to be electrically connected with a contact on a Printed Circuit Board (PCB) 16. When the pushing is released, the switch 15 is returned to its original shape so that the electrical connection with the contact may be released.

The body 14 forms an exterior of the home key 7 and may be formed from a hard material. The body 14 may be mounted on the front case 11 to be partly exposed to the outside of the front case 11. The body 14 may include a locking rim 14a that prevents the body 14 from being released from the front case 11.

The key base 13 is coupled to the lower end of the body 14 so as to transmit the user's pushing force to the switch 15. The key base 13 may be formed of a soft material (e.g., rubber, silicon or the like). The key base 13 may have a pressing protrusion 13c formed on the bottom surface thereof so as to press the switch 15. As described above, the conventional home key 7 may have a structure with a protruding central portion. For this reason, the home key 7 may rock from side to side in a normal state where no force is applied thereto. For example, the home key 7 may be inclined to the right side as illustrated in FIG. 3. Similarly, the home key 7 may also be inclined to the left side. Thus, the conventional home key 7 has a problem of rocking from side to side.

Document GB2054270 discloses a device according to the preamble of claim 1.

### SUMMARY

Accordingly, exemplary embodiments of the present disclosure have been made in an effort to solve the above-mentioned problems and provide an input device of an electronic device which is provided with a floating prevention mechanism capable of preventing floating (e.g., rocking from side to side) of the input device. To solve the problem the invention provides for an input device for an electronic device, comprising a switch; a substrate comprising the switch; a body; a pressing protrusion arranged between a bottom surface of the body and the switch, and configured for pressing the switch when a pressing force is exerted onto the body; and a floating prevention arrangement extending in a direction away from the bottom surface of the body, and being configured and arranged so as to prevent the body from being rocked and/or to impede off-axial movement of the body with respect to a longitudinal axis extending in a direction along a height of the protrusion.

An input device (e.g., a physical button) for an electronic device according to an exemplary embodiment of the present disclosure may include: a case, a body that is partially exposed to an outside of the case, a key base that is made of a soft material and coupled to a lower end of the body, a switch that is positioned below the key base and generates an electrical signal when pressed by a force that is equal to or larger than a predetermined magnitude, and a subtrate on which the switch is mounted. The key base may include a pressing prutrusion that is formed on a bottom surface of the key base and presses the switch, and floating prevention units that are made of a soft material and formed at opposite sides of the key base with respect to the pressing protrusion. The floating prevention units support the body to prevent the body from being rocked.

The pressing protusion may have a height, the switch may have a height, and the floating prevetion unit may have a height that is equal to or larger than the sum of the heights of the pressing protrusion and the switch. A hole may be formed in the key base, and one or more supporting portions may extend downward from a side wall of a hole and may be spaced apart from the bottom surface of the key base by a predetermined distance and may be configured to support the body. The floating prevention unit may be made of an elastic body of a first material and the key base may be formed of a second material, the first material being different from the second material. The first material may be selected from materials including, for example, a spring and a sponge. The floating prevention unit may be elastically deformed when pressed by the force that is equal to or larger than a predetermined magnitude and returned to an original state when the force is released. The force may correspond to the width, the thickness, the material, the number, and the shape of the supporting portions. The key base may further include a fixing unit that is configured to fix a position of the key base relative to the electronic device. The body and key base may be formed as a single structure such as through one of a dual injection molding and an insert injection molding.

An input device for an electronic device according to another exemplary embodiment of the present disclosrue may include a body that forms an external appearance of the input device and is partially exposed to the outside, a key base that is made of a soft material and coupled to a lower end of the body, a switch that is positioned below the key base and generates an electrical signal when pressed by a force that is equal to or larger than a predetermined magnitude, and a subtrate on which the switch is mounted. The key base may include a pressing protrusion that is formed on a bottom surface of the key base and presses the switch, and floating prevention units that are made of a soft material and formed at opposing sides of the key base with respect to the pressing protrusion. The floating prevention units extend from a bottom surace of the key base in a step shape to be partially contacted with the substrate, thereby supporting the body to prevent the body from being rocked.

In an embodiment, the floating prevention units may be formed of an elastic material and may be elastically deformed in response to being pressed by the force that is equal to or larger than the predetermined magnitude. The force may correspond to the size, shape, and material of the floating prevention units.

In an aspect of the present disclosure, an electronic sytem may include an input device. The input device may include a printed circuit board including a dome switch, and a body including a lower surface. The body may be linearly movable in a direction toward and away from the printed circuit board. A pressing protrusion may extend in a direction away from the lower surface of the body and may be configured to press the dome switch. A longintudinal axis may extend along a height of the pressing protrusion. One or more floating prevention units may extend in the direction of the longitudinal axis away from the lower surface of the body and may be configured to impede off-axial movement of the body with respect to the longitudinal axis. Each floating prevention unit may have a first height, the dome switch may have a second height and the pressing protrusion may have a third height. A first height of the floating prevention unit may be at least as large as the sume of the second and third heights. An application of a pressing force may electrically deform the floating prevention units. The system may further include a key base that is coupled to the lower surface of the body, and the key base may include the pressing protrusion and the one or more floating prevention units. An equal number of floating prevention units may be positioned at opposing sides of the pressing protrusion. The key base and the body may be integrally formed. The dome switch may generate an electrical signal when pressed by a force at least as large as a predetermined magnitude and the floating prevention units may be elastically deformed when pressed by the force. The deformation of the floating prevention units may be approximately equal such that the body translates in a substantally non-angled manner when acted upon by the force.

The input device for an electronic device according to the present disclosure may be prevented from being rocked by being additionally provided with the floating prevention units made of a soft material on the key base. In addition, the input device for an electronic device according to the present disclosure may protect the switch from an external impact since the floating prevention units come in contact with the substrate where the switch is mounted, thereby supporting the input device.

These and other aspects of the present disclosure are mor fully described hereinbelow with reference to the accompanying drawings.

### BRIEF DESCRIPTION OF THE DRAWINGS

The above features and advantages of the present disclosure will be more apparent from the following detailed description in conjunction with the accompanying drawings, in which:
FIG. 1 is a view illustrating a conventional electronic device in accordance with the prior art;
FIG. 2 is a view for describing a configuration of a home key of a conventional electronic device in accordance to the prior art;
FIG. 3 is a view illustrating the home key of the conventional electronic device which is inclined to the right side in accordance with the prior art;
FIG. 4 is a cross-sectional view illustrating an input device according to a first exemplary embodiment of the present disclosure;
FIG. 5 is a bottom view illustrating a key base of the input device according to the first exemplary embodiment of the present disclosure;
FIG. 6 is a perspective view illustrating the key base of the input device according to the first exemplary embodiment of the present disclosure;
FIG. 7 is a perspective view of the input device as shown in FIG. 6 illustrating an operated appearance of a floating prevention unit;
FIG. 8 is a front view illustrating a key base of an input device according to a second exemplary embodiment of the present disclosure;
FIG. 9 is a perspective view illustrating the key base of the input device according to the second exemplary embodiemnt of the present disclosure;
FIG. 10 is a view illustrating a key base of an input device according to a third exemplary embodiment of the present disclosure; and
FIG. 11 is a view illustrating a key base of an input device according to a fourth exemplary embodiment of the present disclosure.

### DETAILED DESCRIPTION

Hereinafter, exemplary embodiments of the present disclosure will be described with reference to the accompanying drawings. At this time, it shall be noted that in the accompanying drawings, the same or similar components are depicted by the same or similar reference numerals. Further, in the following description of the present description, a detailed description of known functions and configurations incorporated herein will be omitted when it may make the subject matter of the present description rather unclear. For the same reason, some components are exaggerated, omitted or schematically illustrated, and the size of each component is not intended to be to scale and therefore does not fully reflect the real size thereof. Moreover, the spacing between components as illustrated in the accompanying drawings is not intended to be to scale, and therefore the present disclosure is not limited by the spaces illustrated in the accompanying drawings.

Meanwhile, the exemplary embodiments disclosed in the specification and drawings are merely presented to easily describe technical contents of the present disclosure and help the understanding of the present disclosure and are not intended to limit the scope of the present disclosure.

In addition, an electronic device according to exemplary embodiments of the present disclosure is a device that includes at least one physical input device and may be, for example, a mobile communciation terminal, a smart phone, a PDA, a tablet PC, a hand-held PC, a PMP, or the like.

An input device according to exemplary embodiments of the present disclosure will be described using a home key of an electronic device. However, the exemplary embodiments of the present disclosure may be applied to various keys (for example, a volume key, a power key, or the like) rather than being limited to an application to the home key.

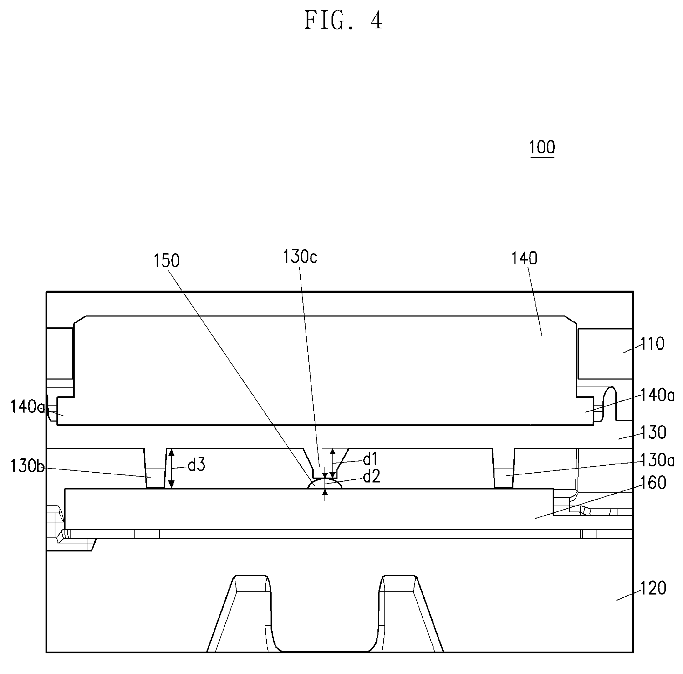

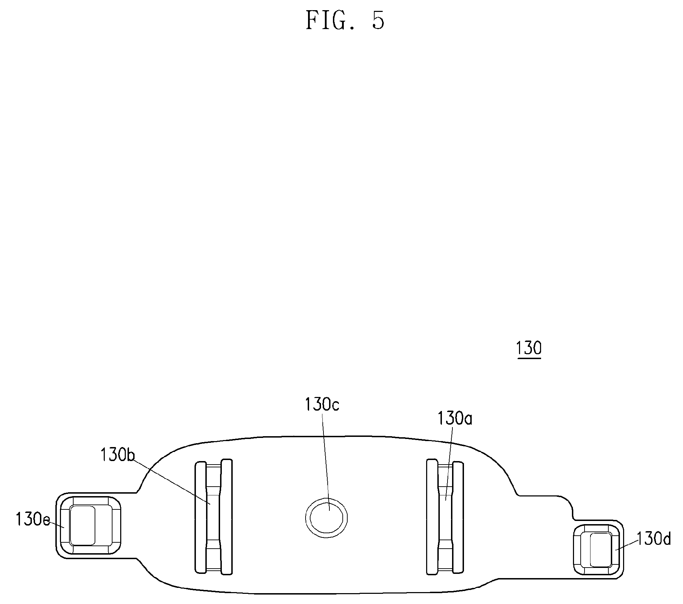

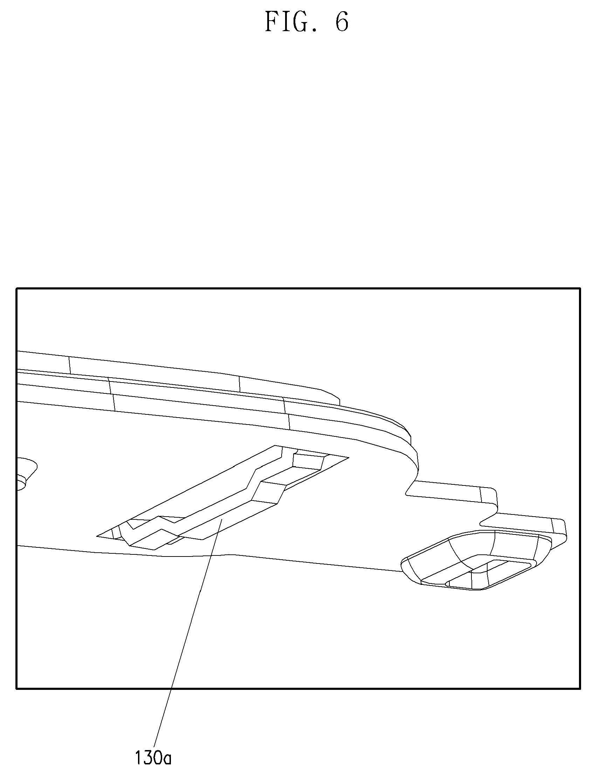

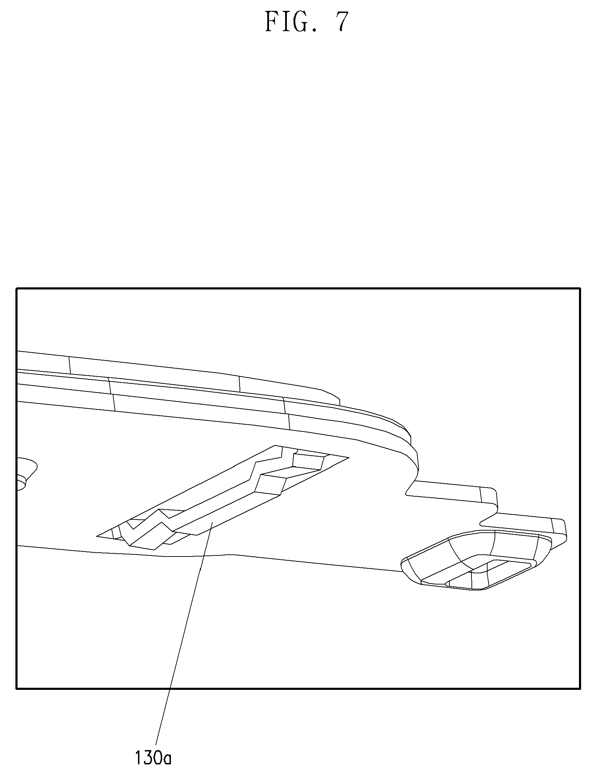

A structure of an input device according to a first exemplary embodiment of the present disclosure will be described with reference to FIGS. 4-7. FIG. 4 is a cross-sectional view illustrating an input device according to a first exemplary embodiment of the present disclosure. FIG. 5 is a bottom view illustrating a key base of the input device according to the first exemplary embodiment of the present disclosure. FIG. 6 is a perspective view illustrating the key base of the input device according to the first exemplary embodiment of the present disclosure.FIG. 7 is a view illustrating an operated appearance of a floating prevention unit of the input device according to the first exemplary embodiment of the present disclosure.

Referring to FIGs. 4 to 7, an input device 100 of the first exemplary embodiment of the present disclosure may be positioned between a front case 110 and a rear case 120. The input device 100 may include a body 140, a key base 130, and a switch 150.

When a force which is equal to or larger than a predetermined magnitude is applied, the switch 150 may generate an electric signal. The switch 150 may be a dome switch. Specifically, the switch 150 is elastically deformed by a pushing operation to be electrically connected with a contact on a PCB 160. When the pushing is released, the switch 150 is returned to its original shape so that the electrical connection with the contact may be released. Meanwhile, although it has been described above that the switch 150 is mounted on the PCB 160, the present disclosure is not limited to this. For example, the switch 150 may be mounted on a separate substrate (for example, Flexible Printed Circuit Board (FPCB)).

The body 140 forms an exterior of the input device 100 and may be formed of a hard material. The body 140 may be coupled to the front case 110 to be partially exposed to the outside and to be movable up and down. Specifically, the body 140 may be partially exposed through a hole formed in the front case 110 and partially positioned inside the front case 110. In addition, the body 140 extends in a horizontal direction by a predetermined length and may include a locking rim 140a that prevents the body 140 from being released from the front case 110.

The key base 130 is positioned between the body 140 and the switch 150 and may transmit the user's pushing force to the switch 150. The key base 130 may be formed of a soft material (for example, rubber, silicon, or the like) so that the lifespan of the switch 150 may not be shortened as might occur over time when the body 140 formed of a hard material and directly presses the switch 150.

The key base 130 may include a pressing protrusion 130c on the bottom surface thereof to press the switch 150. That is, the force generated by pushing the body 140 is transmitted to the switch 150 through the pressing protrusion 130c. In addition, the key base 130 may include fixing units 130d and 130e at opposite ends as illustrated in FIG. 5. The fixing units 130d and 130e are structures for fixing the position of the input device 100. That is, the fixing units 130d and 130e serve to fix the input device 100 in such a manner that the input device 100 may not move horizonally forward, backward, left and right.

In addition, the key base 130 may include a floating prevention or arrangement comprising floating prevention units 130a and 130b at opposite sides of the pressing protrusion 130c so as to prevent the key base 130 from left and right floating. At this time, the floating prevention units 130a and 130b may have a height higher than the pressing protrusion 130c. For example, as illustrated in FIG. 4, each of the floating prevention units 130a and 130b may come in contact with the printed circuit board 160 at one side of the lower end thereof. The height d3 of the floating prevention units 130a and 130b may have a value that is equal to or larger than the sum of the height d1 of the pressing protrusion 130c and the height d2 of the switch 150. However, the first exemplary embodiment of the present disclosure is not limited to this and the height of the floating prevention units 130a and 130b may have a tolerance of several milimeters. That is, the height d3 of the floating prevention units 130a and 130b may have a value which is similar (i.e., the same or approximately) to the sum of the height d1 of the pressing protrusion 130c and the height (d2) of the switch 150. Accordingly, as illustrated in FIG. 4, the floating prevention units 130a and 130b may support the input device 100 at opposite sides with reference to the pressing protrusion 130c so that the input device 100 is not rocked. As a result, the input device 100 according to the first exemplary embodiment of the present disclosure may completely prevent occurrence of leftward and rightward movements.

Each of the floating prevention units 130a and 130b may include one structure (hereinafter, "supporting portion") to support the input device 100. For example, the supporting portion of each floating prevention unit 130a or 130b may extend downward from a side wall of a hole formed in the key base 130 to be spaced apart from the bottom surace of the key base 130 as illustrated in FIGs. 5 and 6. That is, an empty space may exist between the supporting portion and the bottom surface of the key base 130. At this time, the supporting portion may have a shape of a two-tired step. However, the exemplary embodiment of the present disclosure is not limited to this and the supporting portion of each floating prevention unit 130a of 130b may have a shape of a one-tiered step of a three or more tiered step. Further, the floating prevention units 130a and 130b may extend from the bottom surface of the key base 130. That is, no hole may be formed in the key base 130.

The floating prevention units 130a and 130b may have elasticity. For example, the floating prevention units 130a and 130b may maintain the shape as illustrated in FIG. 6 in a state where no force is applied thereto, and may be deformed in shape as illustrated in FIG. 7 in a pressed state where a force which is equal to or larger than a predetermined magnitude is applied thereto. Thereafter, when the force is released, the floating prevention units 130a and 130b may be returned to the origianal states thereof. Through this, the first exemplary embodiment of the present disclosure may minimize the decrease of a click feeling and prevent a problem of causing the body 140 to be floated (rocked) about the pressing protrusion 130c. In addition, the floating prevention units 130a and 130b according to the first exemplary embodiment of the present disclosure may protect the switch 150 from an external impact.

The elastic force may be adjusted by properly changing the width, the thickness and the material of the floating prevention units 130a and 130b, and may adjust the click feeling of the input device 100 through the adjustment of the elastic force. Specifically, there is an advantage in that no floating may occur when the elastic force of the floating prevention units 130a and 130b is strong. However, the click feeling may be degraded since a large force is required in order to push the input device 100. On the contrary, when the elastic force of the floating prevention units 130a and 130b is weak, the click feeling may be improved since a small force is requird for pushing the input device 100. However, there is a problem in that a force for supporting the input device 100 is weak. Accordingly, it is desirable for the designer to properly change the width, the thickness and the material of the floating prevention units 130a and 130b depending on a situation.

Although it has been described above that the floating prevention unit 130a and 130b and the key base 130 are integrally formed with the same material (for example, rubber), the present disclosure is not limited to this. For example, the floating prevention units 130a and 130b may be formed as separate structures (for example, elastic bodies of a material that is different from the key base). For example, the floating prevention units 130a and 130b may be formed of a spring, a sponge (for example, a high-elastic sponge or a compressed sponge), or the like.

Although the body 140 and the key base 130 have been described above as being separate components, the body 140 and the key base 130 may be formed as a single or integral structure through dual injection molding, insert injection molding, or the like.

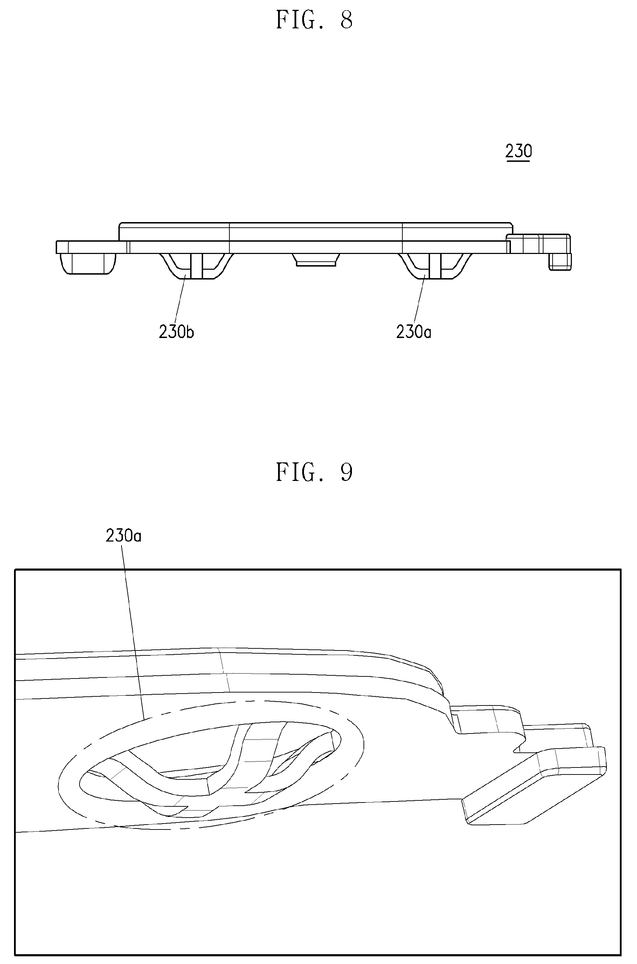

FIG. 8 is a front view of a key base of an input device according to a second exemplary embodiment of the present disclosure, and FIG. 9 is a perspective view illustraing the key base of the input device according to the second exemplary embodiment of the present disclosure.

Referring to FIGs. 8 and 9, each of the floating prevention units 230a and 230b of the key base 230 of of the input device according to the second exemplary embodiment of the present disclosure may include supporting portions arranged in a cross shape. That is, each floating prevention unit 230a or 230b of the key base 230 of the input device according to the second exemplary embodiment of the of the present disclosure may be configured by two supporting portions. Specifically, as illustrated in FIG. 9, the supporting portions of each floating prevention unit 230a or 230b are connected to a hole formed in the key base 230 such that a cross portion thereof protrudes downwardly from the key base 230. The input device according to the second exemplary embodiment of the present disclosure is configured such that the elastic force of the floating prevention units 230a and 230b may be adjusted by increasing the number of supporting portions as described above. Meanwhile, the input device according to the second exemplary embodiment of the present disclosure is similar to the input device according to the first exemplary embodiment of the present disclosure described with reference to FIGs. 4 to 7 except that the shape of the key base 230 is changed. Accordingly, descriptions on the other components of the input device according to the second exemplary embodiment of the present disclosure will be omitted.

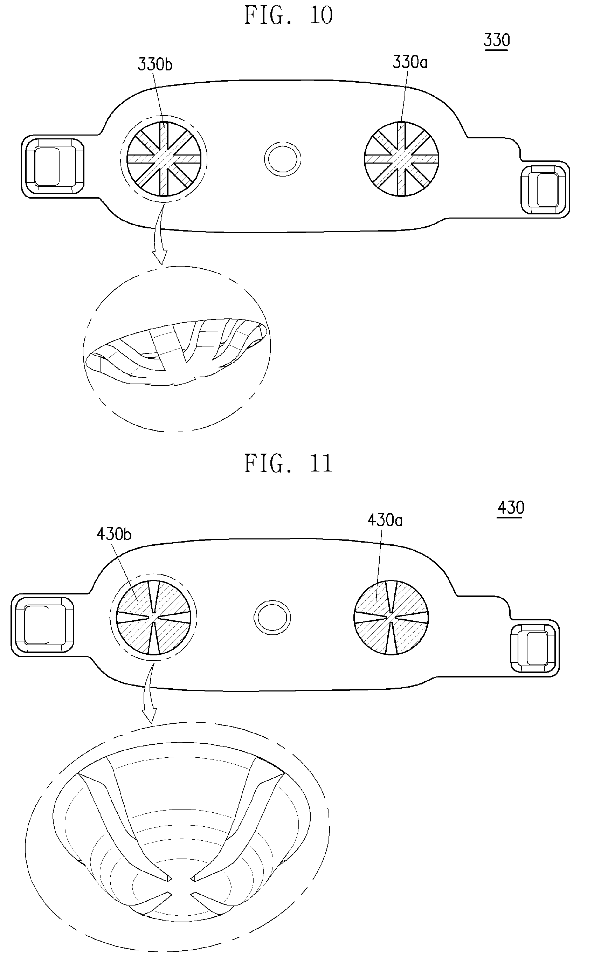

FIG. 10 is a view illustraing a key base of an input device according to a third exemplary embodiment of the present disclosure.

Referring to FIG. 10, each of the floating prevention units 330a and 330b of the key base 330 of the input device according to the third exemplary embodiment of the present disclosure may be formed in a state where three supporting portions are joined with each other. At this time, the three supporting portions are connected to a hole formed in the key base 330 such that the cross portion of the three supporting portions of each floating prevention unit 330a or 330b protrudes downward from the key base 330. That is, similarly to the floating prevention units illustrated in FIGs. 8 and 9, the input device according to the third exemplary embodiment of the present disclosure is configured such that the elastic force may be increased by increasing the number of the supporting portions that form each floating prevention unit 330a or 330b of the key base 330. At this time, as described above with reference to FIGs. 4 to 7, the click feeling may be properly adjusted by changing the width, the thickness, the material, or the like of each supporting portion. However, the present disclosure is not limited to the configuration in which three supporting portions are joined with each other. For example, each floating prevention unit according to the third exemplary embodiment of the present disclosure may be formed by joining four or more supporting portions. Meanwhile, the third exemplary embodiment of the present disclosure is similar to the first exemplary embodiment of the present disclosure except that the shape of the key base 330 is changed. Accordingly, further detailed descriptions on the third exemplary embodiment of the present disclosure will be omitted.

FIG. 11 is a view illsutrating a key base of an input device according to a fourth exemplary embodiment of the present disclosure.

Referring to FIG. 11, each of the floating prevention units 430a and 430b of the input device according to the fourth exemplary embodiment of the present disclosure may include supporting portions arranged in a cross shape. At this time, each supporting portion of each floating prevention unit 430a or 430b has a width which is narrowed in a direction away from the bottom surface of the key base 430. The input device according to the fourth exemplary embodiment of the present disclosure is configured such that the click feeling may be adjusted by adusting the width of each supporting portion. Meanwhile, the input device according to the fourth exemplary embodiment of the present disclosure is similar to the first exemplary embodiment of the present disclosure described above with reference to FIGs. 4 to 7 except that the shape of the key base 430 is changed. Accordingly, detailed descriptions on the other components of the input device according to the fourth exemplary embodiment of the present disclosure will be omitted.

Input devices for an electronic device according to the exemplary embodiments of the present disclosure have been described above with reference to the drawings and specific terms have been used.

## Claims

1. An input device (100) for an electronic device, comprising:
a case (110, 120);
a body (140) that is partially exposed to an outside of the case;
a key base (130; 230; 330; 430) that is made of a soft material and coupled to a lower surface of the body;
a switch (150) that is positioned below the key base so as to generate an electrical signal when pressed by a force that is equal to or larger than a predetermined magnitude; and
a substrate on which the switch is mounted,
wherein the key base (130; 230; 330; 430) includes:
a pressing protrusion (130c) that is formed on a bottom surface of the key base and is configured to press the switch; and
a floating prevention arrangement comprising at least one floating prevention unit (130a, 130b; 230a, 230b; 330a, 330b; 430a, 430b) that is made of a soft material and formed at opposing sides of the key base with respect to the pressing protrusion to support the body
so as to prevent the body from being rocked,
**characterized in that** the floating prevention arrangement or unit (130a, 130b; 230a, 230b; 330a, 330b; 430a, 430b) includes:
a hole formed in the key base (130; 230; 330; 430); and
one or more supporting portions that extend downward from a side wall of the hole and are spaced apart from the bottom surface of the key base by a predetermined distance and are configured to support the body (140).

2. The input device of claim 1, wherein the pressing protrusion (150c) has a height (d1) and the switch (150) has a height (d2), and wherein the floating prevention arrangement or unit (130a, 130b; 230a, 230b; 330a, 330b; 430a, 430b) has a height (d3) that is equal to or larger than a sum of the height (d1) of the pressing protrusion and the height (d2) of the switch.

3. The input device of any one of claims 1 to 2, wherein the floating prevention arrangement or unit (130a, 130b; 230a, 230b; 330a, 330b; 430a, 430b) includes:
one or more supporting portions that extend downward from the bottom surface of the key base (130; 230; 330; 430) and are configured to support the body (140).

4. The input device of any one of claims 1 to 3, wherein the floating prevention arrangement or unit (130a, 130b; 230a, 230b; 330a, 330b; 430a, 430b) is made of a first material and the key base (130; 230; 330; 430) is formed from a second material, the first material being different from the second material.

5. The input device of claim 4, wherein the first material includes an elastic body.

6. The input device of any one of claims 1 to 5, wherein the input device is configured such that the floating prevention unit (130a, 130b; 230a, 230b; 330a, 330b; 430a, 430b) is elastically deformed when pressed by the force that is equal to or larger than the predetermined magnitude and returns to an original state when the force is released.

7. The input device of any one of claims 1 to 6, wherein the force that is equal to or larger than the predetermined magnitude corresponds to a width, thickness, material, number, and/or shape of the supporting portions.

8. The input device of any one of claims 1 to 7, wherein the key base (130; 230; 330; 430) further includes a fixing unit (130d, 130e) that is configured to fix a position of the key base relative to the case (110, 120).

9. The input device of any one of claims 1 to 8, wherein the body (140) and the key base (130; 230; 330; 430) are formed as a single structure through one of a dual injection molding and an insert injection molding.

10. An electronic device comprising the input device according to any one of the preceding claims.

## Patentansprüche

1. Eingabegerät (100) für ein elektronisches Gerät, das Folgendes umfasst:
ein Gehäuse (110, 120);
einen Körper (140), der teilweise zu einer Außenseite des Gehäuses offen liegend ist;
eine Tastenbasis (130; 230; 330; 430), die aus einem weichen Material hergestellt und mit einer unteren Oberfläche des Körpers gekoppelt ist;
einen Schalter (150), der so unter der Tastenbasis positioniert ist, dass er ein elektrisches Signal erzeugt, wenn er durch eine Kraft gedrückt ist, die größer oder gleich einem vorgegebenen Betrag ist; und
ein Substrat, auf dem der Schalter montiert ist,
wobei die Tastenbasis (130; 230; 330; 430) Folgendes beinhaltet:
eine Drückerhöhung (130c), die auf einer unteren Oberfläche der Tastenbasis gebildet ist und konfiguriert ist, den Schalter zu drücken; und
eine Schwimmschutzanordnung, die mindestens eine Schwimmschutzeinheit (130a, 130b; 230a, 230b; 330a, 330b; 430a, 430b) umfasst, die aus einem weichen Material hergestellt und in Bezug auf die Drückerhöhung auf gegenüberliegenden Seiten der Tastenbasis gebildet ist, um den Körper so zu stützen, dass sie den Körper daran hindert, gekippt zu werden,
**dadurch gekennzeichnet, dass** die Schwimmschutzanordnung oder -einheit (130a, 130b; 230a, 230b; 330a, 330b; 430a, 430b) Folgendes beinhaltet:
ein Loch, das in der Tastenbasis (130; 230; 330; 430) gebildet ist; und
einen oder mehrere Stützabschnitte, die sich von einer Seitenwand des Loches abwärts erstrecken und von der unteren Oberfläche der Tastenbasis durch einen vorgegebenen Abstand beabstandet sind und konfiguriert sind, den Körper (140) zu stützen.

2. Eingabegerät nach Anspruch 1, wobei die Drückerhöhung (150c) eine Höhe (d1) aufweist und der Schalter (150) eine Höhe (d2) aufweist und wobei die Schwimmschutzanordnung oder -einheit (130a, 130b; 230a, 230b; 330a, 330b; 430a, 430b) eine Höhe (d3) aufweist, die größer oder gleich einer Summe der Höhe (d1) der Drückerhöhung und der Höhe (d2) des Schalters ist.

3. Eingabegerät nach irgendeinem der Ansprüche 1 bis 2, wobei die Schwimmschutzanordnung oder -einheit (130a, 130b; 230a, 230b; 330a, 330b; 430a, 430b) Folgendes beinhaltet:
einen oder mehrere Stützabschnitte, die sich von der unteren Oberfläche der Tastenbasis (130; 230; 330; 430) abwärts erstrecken und konfiguriert sind, den Körper (140) zu stützen.

4. Eingabegerät nach irgendeinem der Ansprüche 1 bis 3, wobei die Schwimmschutzanordnung oder -einheit (130a, 130b; 230a, 230b; 330a, 330b; 430a, 430b) aus einem ersten Material hergestellt ist und die Tastenbasis (130; 230; 330; 430) aus einem zweiten Material gebildet ist, wobei das erste Material vom zweiten Material verschieden ist.

5. Eingabegerät nach Anspruch 4, wobei das erste Material einen elastischen Körper beinhaltet.

6. Eingabegerät nach irgendeinem der Ansprüche 1 bis 5, wobei das Eingabegerät derart konfiguriert ist, dass die Schwimmschutzeinheit (130a, 130b; 230a, 230b; 330a, 330b; 430a, 430b) elastisch verformt wird, wenn sie durch die Kraft gedrückt ist, die größer oder gleich dem vorgegeben Betrag ist, und in einen Ursprungszustand zurückkehrt, wenn die Kraft aufgehoben ist.

7. Eingabegerät nach irgendeinem der Ansprüche 1 bis 6, wobei die Kraft, die größer oder gleich dem vorgegebenen Betrag ist, mit einer Breite, einer Dicke, einem Material, einer Anzahl und/oder einer Gestalt der Stützabschnitte korrespondiert.

8. Eingabegerät nach irgendeinem der Ansprüche 1 bis 7, wobei die Tastenbasis (130; 230; 330; 430) ferner eine Fixiereinheit (130d, 130e) beinhaltet, die konfiguriert ist, eine Position der Tastenbasis relativ zum Gehäuse (110, 120) zu fixieren.

9. Eingabegerät nach irgendeinem der Ansprüche 1 bis 8, wobei der Körper (140) und die Tastenbasis (130; 230; 330; 430) durch eines von einem Zweikomponenten-Spritzgießen und einem Insert-Spritzgießen als eine einzige Struktur gebildet sind.

10. Elektronisches Gerät, das das Eingabegerät nach irgendeinem der vorhergehenden Ansprüche umfasst.

## Revendications

1. Dispositif d'entrée (100) pour un dispositif électronique, comprenant :
un boîtier (110, 120) ;
un corps (140) qui est partiellement exposé à l'extérieur du boîtier ;
une base de touches (130 ; 230 ; 330 ; 430) qui est constituée d'un matériau souple et couplée à une surface inférieure du corps ;
un commutateur (150) qui est positionné au-dessous de la base de touches de manière à générer un signal électrique lorsqu'il est pressé par une force supérieure ou égale à une grandeur prédéterminée ; et
un substrat sur lequel le commutateur est monté,
dans lequel la base de touches (130 ; 230 ; 330 ; 430) comprend :
une protubérance de pression (130c) qui est formée sur une surface inférieure de la base de touches et qui est configurée pour presser le commutateur ; et
un agencement de prévention de flottement comprenant au moins une unité de prévention de flottement (130a, 130b ; 230a, 230b ; 330a, 330b ; 430a, 430b) qui est constituée d'un matériau souple et qui est formée sur des côtés opposés de la base de touches par rapport à la protubérance de pression pour supporter le corps de manière à empêcher que le corps ne bascule,
**caractérisé en ce que** l'agencement ou l'unité de prévention de flottement (130a, 130b ; 230a, 230b ; 330a, 330b ; 430a, 430b) comprend :
un trou formé dans la base de touches (130 ; 230 ; 330 ; 430) ; et
une ou plusieurs portions de support qui s'étendent vers le bas à partir d'une paroi latérale du trou, qui sont espacées de la surface inférieure de la base de touches d'une distance prédéterminée et qui sont configurées pour supporter le trou (140).

2. Dispositif d'entrée selon la revendication 1, dans lequel la protubérance de pression (150c) a une hauteur (d1) et le commutateur (150) a une hauteur (d2), et dans lequel l'agencement ou l'unité de prévention de flottement (130a, 130b ; 230a, 230b ; 330a, 330b ; 430a, 430b) a une hauteur (d3) supérieure ou égale à une somme de la hauteur (d1) de la protubérance de pression et de la hauteur (d2) du commutateur.

3. Dispositif d'entrée selon l'une quelconque des revendications 1 et 2, dans lequel l'agencement ou l'unité de prévention de flottement (130a, 130b ; 230a, 230b ; 330a, 330b ; 430a, 430b) comprend :
une ou plusieurs portions de support qui s'étendent vers le bas à partir de la surface inférieure de la base de touches (130 ; 230 ; 330 ; 430) et qui sont configurées pour supporter le corps (140).

4. Dispositif d'entrée selon l'une quelconque des revendications 1 à 3, dans lequel l'agencement ou l'unité de prévention de flottement (130a, 130b ; 230a, 230b ; 330a, 330b ; 430a, 430b) est constitué d'un premier matériau et la base de touches (130 ; 230 ; 330 ; 430) est constituée d'un deuxième matériau, le premier matériau étant différent du deuxième matériau.

5. Dispositif d'entrée selon la revendication 4, dans lequel le premier matériau comprend un corps élastique.

6. Dispositif d'entrée selon l'une quelconque des revendications 1 à 5, dans lequel le dispositif d'entrée est configuré de sorte que l'unité de prévention de flottement (130a, 130b ; 230a, 230b ; 330a, 330b ; 430a, 430b) soit élastiquement déformée lorsqu'elle est pressée par la force supérieure ou égale à la grandeur prédéterminée et revienne à son état initial lorsque la force est relâchée.

7. Dispositif d'entrée selon l'une quelconque des revendications 1 à 6, dans lequel la force qui est supérieure ou égale à la grandeur prédéterminée correspond à une largeur, une épaisseur, un matériau, un nombre et/ou une forme des portions de support.

8. Dispositif d'entrée selon l'une quelconque des revendications 1 à 7, dans lequel la base de touches (130 ; 230 ; 330 ; 430) comprend en outre une unité de fixation (130d, 130e) qui est configurée pour fixer une position de la base de touches par rapport au boîtier (110, 120).

9. Dispositif d'entrée selon l'une quelconque des revendications 1 à 8, dans lequel le corps (140) et la base de touches (130 ; 230 ; 330 ; 430) sont formés en tant qu'une structure unique par l'intermédiaire de l'un d'un moulage par injection double et d'un moulage par injection avec pièce d'insertion.

10. Dispositif électronique comprenant le dispositif d'entrée selon l'une quelconque des revendications précédentes.
